# EUROPEAN PATENT SPECIFICATION

(11) **EP 0 571 480 B1**
(45) Date of publication and mention of the grant of the patent: **02.08.1995**
(21) Application number: 92905058.1
(22) Date of filing: 07.02.1992
(51) Int. Cl.: F16L 11/08, A01J 7/00

(54) **MILKING MACHINE HOSE**
MELKMASCHINENSCHLAUCH
TUBULURE DE MACHINE A TRAIRE

(30) Priority: 14.02.1991 SE 9100439
(43) Date of publication of application: 01.12.1993
(73) Proprietor: ALFA-LAVAL AGRICULTURE INTERNATIONAL AB, 147 21 Tumba (SE)
(72) Inventor: HERNVALL, Hans, S-123 48 Farsta (SE); PETTERSSON, Torbjörn, S-154 00 Gnesta (SE)
(74) Representative: Lerwill, John
(86) International application number: SE9200074
(87) International publication number: WO9214958

(56) References cited:
- EP-A- 0 153 739
- EP-A- 0 473 045
- FR-A- 2 475 683
- GB-A- 1 533 204
- US-A- 1 281 557
- US-A- 2 798 508
- US-A- 2 897 839
- US-A- 3 334 663
- US-A- 4 103 713

## Description

The present invention relates to a hose and, more particularly, to a hose constituting a part of a milking machine, said milking machine having means for generating a negative pressure in the hose.

Milk conducting hoses of milking machines must fulfil certain requirements, namely: that they do not tend to collapse under influence of a determined negative pressure (nowadays it is often required that hoses of this kind shall stand a vacuum level of 75 kPa as compared with 50 kPa previously), and thus do not throttle the milk flow during milking, that they are resistant to exterior mechanical stresses, for instance tramping of the animals, that they are easy to wash up, i.e. have smooth surfaces free of creases, in particular inside the hoses, and that they consist of a material allowed for contacting milk. Conventional hoses fulfilling these requirements consist of homogeneous materials and are relatively thick walled.

A drawback to conventional milking machine hoses is that they are relatively heavy, which among other things means that parts of the milking machine are heavy for the milker to carry. Thus, the hoses of a portable milking member of the milking machine can have a weight of up to about 2.5 kg.

Another drawback to conventional hoses is that they are relatively resistant to bending, which means that it is difficult to place the milking member in an ideal position in relation to the udder. Thus, the relatively stiff hoses may give rise to an unequal load on the milking member, so that the milking member is tilted relative to the udder. This may result in an uneven milking of the udder and a risk of the milking member falling off during milking.

In addition, the development of automatic milking has created a need for hoses which are more flexible and lighter than the above described conventional hoses.

Hoses which are reinforced by means of stiff materials and which as a result may be made relatively light and flexible by reduction of the wall thickness of the hoses, are known in many other applications than milking. A common type of such a reinforced hose is provided by embedding reinforcement wires in the wall of the hose, which reinforcement wires extend helically along the hose coaxially with the latter, see for instance GB 1 533 204. As a result the wall thickness of the hose and, consequently, the weight of the hose can be reduced. It would appear suitable to utilize reinforced hoses of this type also for milking. However, such known reinforced hoses have the disadvantage that they are difficult to expand radially, and, consequently, the hoses are difficult to apply on connection nipples having larger outer diameter than the inner diameter of the hoses. For this reason the known hoses are unsuited for milking, because milking machines normally comprise a plurality of connection nipples having somewhat various outer diameters, on which connection nipples the hoses are to be applied manually.

Hoses provided with a reinforcement wire extending along the hose through a helical cavity in the wall of the hose are know from for instance SE 409 613 and US-A-2 798 508. For example, US-A-2 798 508 discloses a hose comprising an annular elastic wall having a circular cross-section and two end portions, the wall being reinforced by at least one elongated reinforcement member consisting of a substantially harder material than the wall and extending along the hose in a helical cavity in the wall, the reinforcement member being arranged in said cavity, such that relative movement between the reinforcement member and the wall is allowed. In an unbent state the helical cavity of this type of hose has an extension as seen in an axial section through the hose which is substantially larger than that of the reinforcement wire. As the hose is bent said extension of the helical cavity is reduced in the part of the wall of the hose which forms an outwardly directed concave shape. As a result the hose will be extremely flexible.

However, said extreme flexibility of this type of hose is achieved at the expense of that the part of the hose wall, which forms an outwardly directed concave shape when bending the hose, is folded. In consequence, the hose will be unsuited for milking machines, since such folding may give rise to turbulent milk flow deteriorating the milk and is unacceptable frcm hygienic reasons. In addition, folds in the hose may give rise to inclusions of milk residues which are difficult to remove by washing. The relatively large cavity around the reinforcement wire may also give rise to cleaning problems and an undesirable axial compression of the hose, as the interior of the hose is subjected to vacuum.

The object of the present invention is to provide a new milking machine hose which is able to withstand a strong interior negative pressure and which is easy to bend, easy to wash up, has a low weight and allows radial expansion of the end portions of the hose when applying these on nipples.

This object is obtained by means of a hose which is characterized over that of US-A-2 798 508 in that the reinforcement member completely fills up said cavity, and in that each end portion of the hose is adapted to be radially expanded, whereby the reinforcement member is displaced relative to the hose along said helical cavity from the position in which the reinforcement member was situated when the end portion was unexpanded, the reinforcement member forming a helical path having a larger diameter along each expanded end portion than along the unexpanded wall of the hose.

A hose formed in this manner can be made more flexible and lighter than conventional hoses, without deteriorating the other necessary requirements of the hose and without undesirable folds being formed on the inner and outer surfaces of the hose when bending the hose. This means that a milking member of a milking machine equipped with the new hose will be easier to handle and will load the teats more equally during milking, as compared with milking members equipped with conventional hoses.

The statement that "the reinforcement member is arranged in the cavity, such that relative movement between the reinforcement member and the wall of the hose is allowed" should be understood such that the frictional resistance between the reinforcement member and the wall of the hose is not stronger than that the reinforcement member is displaced in the cavity at radial expansion of the end portions of the hose under influence of forces created when applying said end portions on conventional nipples. A frictional resistance sufficiently small may be achieved by choosing suitable materials, for instance polyamide or polypropylene in the reinforcement member and softened polyvinyl chloride, styrene rubber or nitrile rubber in the wall of the hose. As an alternative, the reinforcement member may be pretreated with an antiadhesive substance before or while the hose is fabricated.

Since the reinforcement member completely fills the cavity, an inexpensive fabrication of the hose is made possible by extruding the wall of the hose. During the extrusion, the reinforcement member is utilized for the formation of the helical cavity.

According to a preferred embodiment of the new hose, the wall is reinforced by at least two elongated reinforcement members extending helically and in parallel with one another along the hose. As a result, the end portions of the hose will be easier to expand radially, when applying said end portions on nipples, because each of said two reinforcement members can extend helically in a courser pitch than that of one single reinforcement member, without deteriorating the ability of the hose to resist the wall from collapsing. Thus, such a courser pitch means that each reinforcement can slide easier in its cavity.

The two helical reinforcement members suitably form two coils displaced 180° to one another, as seen in the circumferential direction of said coils. As a result, the wall of the hose will be uniformly reinforced along the hose by the two reinforcement members.

The hose may consist of a homogeneous material, which means a low cost for manufacturing the hose. However, by co-extrusion it is also possible to fabricate the hose with two concentric wall layers, one outer and one inner, wherein the outer wall layer may consist of a relatively inexpensive material whereas the inner layer may consist of a material relatively expensive and allowed for contacting milk. In addition, the outer wall layer may be made by a material more resistant to mechanical impacts than the inner wall layer. The outer wall layer may for instance contain substances against the deteriorating effect of ozone. Such substances are unsuitable in materials which will be in contact with milk.

Each cavity may be located in said outer wall layer, which normally is designed thicker than the more expensive inner wall layer, but as an alternative it may be located in both the outer wall layer and the inner wall layer. Of course, if desired the cavity may also be arranged solely in the inner wall layer.

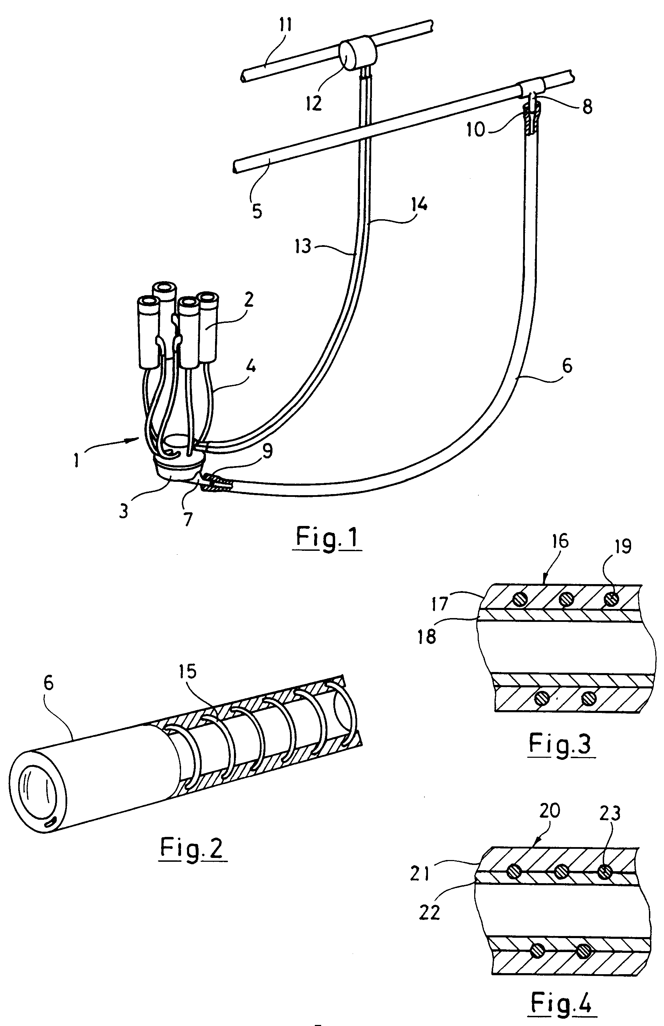

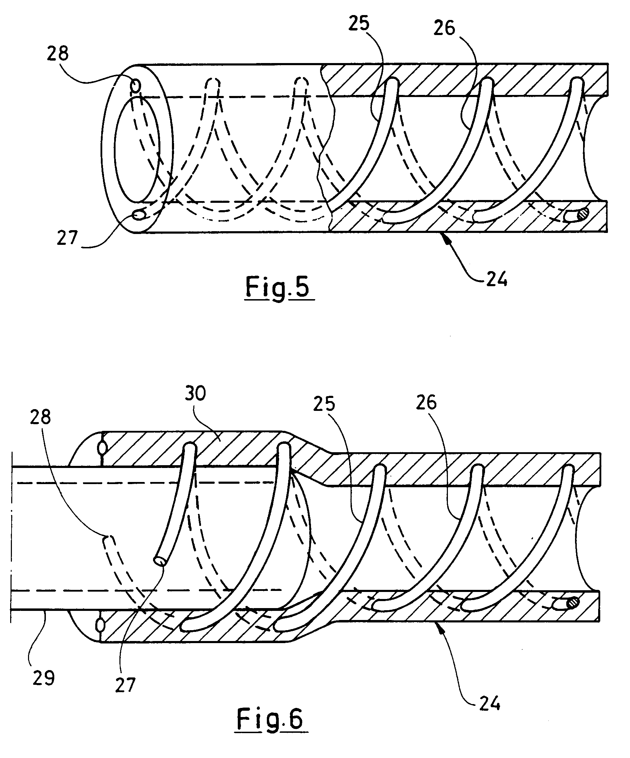

The invention is explained more closely in the following with reference to the accompanying drawing, in which figure 1 shows a milking machine with hoses according to the invention, figure 2 shows a part sectional view of a hose according to the invention, figures 3 and 4 show sections through two other hoses according to the invention, figure 5 shows a part sectional view of a hose according to the invention reinforced by two reinforcement members, and figure 6 shows the hose of figure 5 applied on a nipple.

The milking machine 1 shown in figure 1 comprises four teat cups 2, a teat cup claw 3, four teat cup liners 4, which connect the teat cups 2 to the teat cup claw 3, a milk conduit 5, and an elastic hose 6 with circular cross-section, which is connected to the teat cup claw 3 and the milk conduit 5. The teat cup claw 3 and the milk conduit 5 are provided with tubular connection nipples 7 and 8, respectively, with circular cross-section, on which respective end portions 9, 10 of the hose 6 are applied. The outer diameter of the connection nipples 7, 8 is larger than the inner diameter of the hose 6, which means that the end portions 9, 10 of the hose 6 are radially expanded and thereby are secured to the connection nipples 7, 8.

The milking machine 1 further comprises a vacuum conduit 11 with a pulsator 12, and two elastic hoses 13, 14 extending between the teat cup claw 3 and the pulsator 12 and connected to these via connection nipples in the same manner as described above for the hose 6. The vacuum hoses 13, 14 have substantially smaller diameter than the hose 6 but besides that they have the same design as the hose 6.

The hose 6 has a wall consisting of a seamless, substantially homogeneous elastic, thermoplastic or plastic non-yielding material, for instance softened polyvinyl chloride, styrene rubber or nitrile rubber, and is fabricated by extrusion (figure 2). A wire 15 with circular cross-section is embedded in the wall of the hose 6 and extends helically with a pitch which is substantially larger than the diameter of the wire 15 along the hose 6 and coaxially with the latter. (As an alternative, the wire 15 may have another cross-section, for instance oval or polygonal). The wire 15 consists of a substantially stiffer material than the wall of the hose 6, for instance metal, polyamide or polypropylene, and strengthens the resistance of the hose 6 against flattening when negative pressure prevails in the hose 6. As a result the wall of the hose 6 may be made substantially thinner than the walls of conventional hoses, which allows a weight reduction of the hose 6 by about 50 %.

The hose 16 shown in figure 3 comprises two jointed coaxial outer and inner wall layers 17 and 18, respectively, of which the outer wall layer 17 preferably consists of a relatively inexpensive material whereas the inner wall layer 18, which will be in contact with milk, preferably consists of a relatively expensive material allowed for contacting milk. The hose 16 is provided with a reinforcement wire 19 of the same design as that of the hose 6 located only in the outer wall layer 17. In figure 4 there is shown a hose 20 of the same type as the hose 16 according to figure 3 comprising an outer wall layer 21 and an inner wall layer 22, but provided with a reinforcement wire 23 located partly in both the outer wall layer 21 and the inner wall layer 22.

The hose 24 shown in figure 5 is identical to the hose 6 according to figure 2, except that the hose 24 is reinforced by two wires 25 and 26. Each of these wires 25, 26 extends helically along the wall of the hose 24 with a pitch which is twice the pitch of the wire 15 of the hose 6. The wires 25, 26 extend in parallel with one another along the hose 24 and form two coils displaced 180° to one another, as seen in the circumferential direction of said coils.

Figure 6 illustrates how two ends 27 and 28 of the wires 25 and 26, respectively, change positions in the cavities of the hose 24, as an end portion 30 of the hose 24 is applied on a nipple 29.

When manufacturing hoses according to the invention by extruding the wall material of the hose, the reinforcement wire is utilized as an antiadhesive mould, so that a cavity having dimensions corresponding to the reinforcement wire is formed in the wall of the hose. In this manner it is made possible that the reinforcement wire completely fills up said cavity in the finished hose without resulting in a chemical joint.

## Claims

1. A hose comprising an annular elastic wall (16, 20) having a circular cross-section and two end portions (9, 10, 30), the wall (16, 20) being reinforced by at least one elongated reinforcement member (15, 19, 23, 25, 26) consisting of a substantially harder material than the wall and extending along the hose in a helical cavity in the wall, the reinforcement member being arranged in said cavity, such that relative movement between the reinforcement member and the wall is allowed, characterized in that the reinforcement member (15, 19, 23, 25, 26) completely fills up said cavity, and in that each end portion (9, 10, 30) of the hose is adapted to be radially expanded, whereby the reinforcement member (15, 19, 23, 25, 26) is displaced relative to the hose along said helical cavity from the position in which the reinforcement member was situated when the end portion was unexpanded, the reinforcement member forming a helical path having a larger diameter along each expanded end portion than along the unexpanded wall of the hose.

2. A hose according to claim 1, characterised in that the wall is reinforced by at least two elongated reinforcement members (25, 26) extending helically and in parallel with one another along the hose (24).

3. A hose according to claim 2, characterised in that the two helical reinforcement members (25, 26) form two coils displaced 180° to one another, as seen in the circumferential direction of said coils.

4. A hose according to any of claims 1-3, characterised in that the wall of the hose (6) consists of a substantially homogeneous material.

5. A hose according to any of claims 1-3, characterized in that the wall of the hose (16, 20) consists of two concentrical wall layers (17, 18; 21, 22) one outer and one inner.

6. A hose according to claim 5, characterized in that the inner wall layer (8, 22) consists of a material allowed for contacting milk.

7. A hose according to claim 5 or 6, characterized in that the or each cavity is solely located in the outer wall layer (17).

8. A hose according to claim 5 or 6, characterized in that the or each cavity is located in both the outer wall layer (21) and the inner wall layer (22).

9. A hose according to any of the preceding claims, characterizing in that the hose is for use in a milking machine, said milking machine having means for generating a negative pressure in the hose, said end portion (9, 10, 30) of the hose being applied on a milk conducting nipple (7, 8, 29) of the machine, the nipple having an outer diameter exceeding the inner diameter of the annular wall of the hose.

## Patentansprüche

1. Schlauch mit einer ringförmigen Wandung (16, 20) mit Kreisquerschnitt und zwei Endabschnitten (9, 10, 30), wobei die Wadung (16, 20) mit mindestens einem langgestreckten Verstärkungselement (15, 19, 23, 25, 26) verstärkt ist, das aus einem erheblich härteren Material als die Wandung besteht und in einem wendelförmigen Hohlraum in der Wandung entlang des Schlauchs verläuft, wobei das Verstärkungselement in dem Hohlraum so angeordnet ist, daß eine Relativbewegung zwischen ihm und der Wandung möglich ist, **dadurch gekennzeichnet,** daß das Verstärkungselement (15, 19, 23, 25, 26) den Hohlraum vollständig ausfüllt und daß jeder Endabschnitt (9, 10, 30) des Schlauchs radial aufweitbar ist, wodurch das Verstärkungselement (15, 19, 23, 25, 26) relativ zum Schlauch entlang des wendelförmigen Hohlraums aus der Position, in der es sich bei unaufgeweitetem Schlauchende befand, verschoben wird, wobei das Verstärkungselement eine wendelförmige Bahn ausbildet, die einen größeren Durchmesser in jedem aufgeweiteten Endabschnitt als entlang der nicht aufgeweiteten Wandung des Schlauches hat.

2. Schlauch nach Anspruch 1, **dadurch gekennzeichnet,** daß die Wandung mit mindestens zwei langgestreckten Verstärkungselementen (25, 26) verstärkt ist, die wendelförmig und parallel zueinander entlang des Schlauchs (24) verlaufen.

3. Schlauch nach Anspruch 2, **dadurch gekennzeichnet,** daß die beiden wendelförmigen Verstärkungselemente (25, 26) zwei Wendeln bilden, die in Umfangsrichtung derselben gesehen um 180° gegeneinander vesetzt sind.

4. Schlauch nach einem der Ansprüche 1 - 3, **dadurch gekennzeichnet,** daß die Wandung des Schlauchs (6) aus einem im wesentlichen homogenen Material besteht.

5. Schlauch nach einem der Ansprüche 1 - 3, **dadurch gekennzeichnet,** daß die Wandung des Schlauchs (16, 20) aus einer äußeren und einer inneren Wandschicht (17, 18; 21, 22) bestehen, die zueinander konzentrisch sind.

6. Schlauch nach Anspruch 5, **dadurch gekennzeichnet,** daß die Innenwandschicht (8, 22) aus einem zur Berührung mit Milch zugelassenen Werkstoff besteht.

7. Schlauch nach Anspruch 5 oder 6, **dadurch gekennzeichnet,** daß der oder beide Hohlräume sich nur in der Außenwandschicht (17) befinden.

8. Schlauch nach Anspruch 5 oder 6, **dadurch gekennzeichnet,** daß der oder beide Hohlräume sich in sowohl der Außenwandwandschicht (21) als auch in der Innenwandschicht (22) befinden.

9. Schlauch nach einem der vorgehenden Ansprüche, **dadurch gekennzeichnet,** daß der Schlauch für die Benutzung in einer Melkmaschine gedacht ist, die Mittel zum Erzeugen eines Unterdrucks in ihm aufweist, wobei der Endabschnitt (9, 10, 30) des Schlauchs an einen milchführenden Nippel (7, 8, 20) der Maschine angesetzt ist, dessen Außendurchmesser größer als der Innendurchmesser der ringförmigen Wandung des Schlauches ist.

## Revendications

1. Tuyau flexible comprenant une paroi annulaire élastique (16, 20) de section circulaire et deux portions d'extrémité (9, 10, 30), la paroi (16, 20) étant renforcée par au moins un élément de renforcement allongé (15, 19, 23, 25, 26) consistant en un matériau sensiblement plus dur que la paroi et s'étendant le long du tuyau flexible dans une cavité hélicoïdale de la paroi, l'élément de renforcement étant disposé dans ladite cavité de manière qu'un mouvement relatif entre l'élément de renforcement et la paroi soit permis, caractérisé en ce que l'élément de renforcement (15, 19, 23, 25, 26) remplit complètement ladite cavité, et en ce que chaque portion d'extrémité (9, 10, 30) du tuyau flexible est adaptée à être élargie radialement, l'élément de renforcement (15, 19, 23, 25, 26) étant alors déplacé par rapport au tuyau flexible le long de ladite cavité hélicoïdale depuis la position dans laquelle l'élément de renforcement était situé quand la portion d'extrémité n'était pas élargie, l'élément de renforcement formant un parcours hélicoïdal d'un diamètre plus important le long de chaque portion d'extrémité élargie que le long de la paroi du tuyau flexible qui n'est pas élargie.

2. Tuyau flexible selon la revendication 1, caractérisé en ce que la paroi est renforcée par au moins deux éléments de renforcement allongés (25, 26) s'étendant hélicoïdalement et en parallèle l'un avec l'autre le long du tuyau flexible (24).

3. Tuyau flexible selon la revendication 2, caractérisé en ce que les deux éléments de renforcement hélicoïdaux (25, 26) forment deux enroulements déplacés de 180° l'un par rapport à l'autre, vus dans la direction circonférentielle desdits enroulements.

4. Tuyau flexible selon l'une quelconque des revendications 1 à 3, caractérisé en ce que la paroi du tuyau flexible (6) consiste en un matériau sensiblement homogène.

5. Tuyau flexible selon l'une quelconque des revendications 1 à 3, caractérisé en ce que la paroi du tuyau flexible (16, 20) consiste en deux couches de paroi concentriques (17, 18; 21, 22) dont l'une est à l'extérieur et l'autre à l'intérieur.

6. Tuyau flexible selon la revendication 5, caractérisé en ce que la couche de paroi interne (8, 22) consiste en un matériau autorisé à venir en contact avec le lait.

7. Tuyau flexible selon la revendication 5 ou 6, caractérisé en ce que la ou chaque cavité est uniquement située dans la couche de paroi externe (17).

8. Tuyau flexible selon la revendication 5 ou 6, caractérisé en ce que la ou chaque cavité est située à la fois dans la couche de paroi externe (21) et dans la couche de paroi interne (22).

9. Tuyau flexible selon l'une quelconque des revendications précédentes, caractérisé en ce que le tuyau flexible est destiné à être utilisé dans une machine de traite, ladite machine de traite comprenant des moyens pour générer une dépression dans le tuyau flexible, ladite portion d'extrémité (9, 10, 30) du tuyau flexible étant appliquée sur un embout conducteur de lait (7, 8, 29) de la machine, l'embout ayant un diamètre externe dépassant le diamètre interne de la paroi annulaire du tuyau flexible.
